# FASCICULE DE BREVET EUROPEEN

(11) **EP 3 665 922 B1**
(45) Date de publication et mention de la délivrance du brevet: **27.09.2023**
(21) Numéro de dépôt: 18762586.8
(22) Date de dépôt: 08.08.2018
(51) Int. Cl.: H04W 12/04, H04W 12/37, H04W 4/70, H04L 67/125, H04B 3/54, H04W 76/14, H04W 84/18

(54) **GESTION DE COMMUNICATION ENTRE UN TERMINAL ET UN SERVEUR RÉSEAU**
VERWALTUNG DER KOMMUNIKATION ZWISCHEN EINEM ENDGERÄT UND EINEM NETZWERKSERVER
MANAGEMENT OF COMMUNICATION BETWEEN A TERMINAL AND A NETWORK SERVER

(30) Priorité: 11.08.2017 FR 1757658
(43) Date de publication de la demande: 17.06.2020
(73) Titulaire: Orange, 92130 Issy-les-Moulineaux (FR)
(72) Inventeur: LAMPIN, Quentin, 92326 Châtillon Cedex (FR)
(86) Numéro de dépôt international: PCT/FR2018/052037
(87) Numéro de publication internationale: WO 2019/030457

(56) Documents cités:
- WO-A1-2016/001316
- US-A1- 2014 122 878
- Jaehyu Kim ET AL: "A Dual Key-Based Activation Scheme for Secure LoRaWAN", , 28 avril 2017 (2017-04-28), XP055416927, Extrait de l'Internet: URL:http://downloads.hindawi.com/journals/ wcmc/aip/6590713.pdf [extrait le 2017-10-18]

## Description

L'invention se situe dans le domaine des télécommunications.

L'invention concerne plus particulièrement un système de communication dans lequel un terminal communique avec un serveur d'application apte à fournir des services applicatifs à ce terminal par l'intermédiaire d'un réseau de télécommunications, et plus particulièrement d'un serveur de ce réseau. Aucune limitation n'est attachée à la nature du terminal ni à la nature des services applicatifs fournis. Le terminal peut être un terminal fixe ou mobile, tel qu'un compteur électrique, un capteur...Le serveur d'application peut être opéré par un fournisseur de services quelconque, comme par exemple un fournisseur d'électricité, d'eau...

L'état de la technique est connu de par le document WO 2016/001316 A1 qui concerne la sécurité des échanges entre un terminal et un serveur applicatif par l'intermédiaire d'un dispositif de transmission apte à communiquer avec un serveur de gestion via un serveur réseau.

L'invention a aussi une application privilégiée mais non limitative dans le contexte de l'Internet des Objets, et notamment des architectures ou réseaux étendus de type LoRaWAN^{™} (pour « Long Range Wide Area Network »). De façon connue, le protocole en cours de standardisation LoRaWAN^{™} permet une communication radio à bas débit (inférieur à 50 kbit/s) et à faible consommation d'énergie, d'objets communiquant selon la technologie LoRa^{™} (pour « Long range »), et connectés à Internet via un réseau de communication.

Dans une architecture de type LoRaWAN^{™}, chaque terminal est amené à communiquer avec un serveur applicatif via un réseau de télécommunications. Plus particulièrement, les données émises par chaque terminal, via une liaison radio, sont reçues par une pluralité de passerelles ou stations de base qui les relaient vers un serveur du réseau, via une connexion filaire ou cellulaire. Ce serveur du réseau filtre les messages reçus des terminaux (et vérifie notamment leur provenance et leur intégrité), et les retransmet aux serveurs applicatifs concernés.

Malgré une technologie radio optimisée pour une longue portée, de nombreux terminaux conçus pour fonctionner selon la technologie LoRa^{™} ne parviennent pas à communiquer avec les passerelles du réseau Lora^{™} désiré car les signaux émis par ces terminaux ne parviennent pas jusqu'aux passerelles. C'est notamment le cas lorsque ces terminaux sont par exemple positionnés dans des zones telles que des sous-sols, des caves, des bâtiments en tôle...

De façon connue, des passerelles additionnelles peuvent être ajoutées au réseau LoRa^{™} pour permettre à ces terminaux de communiquer avec ce réseau.

Cependant, ces passerelles sont coûteuses. De plus, elles requièrent un raccordement secteur et une connexion cellulaire ou filaire.

De plus, il a été constaté que certains terminaux connectés au réseau car positionnés initialement dans une zone couverte par une station de base peuvent se retrouver dans une zone non couverte par une station de base.

Cette situation se produit par exemple lors de l'acheminement d'un terminal d'un établissement d'un client où il est configuré à son lieu d'installation finale.

En effet, suite à sa configuration, le terminal émet des demandes de connexion afin de communiquer avec un serveur réseau du réseau LoRa. Si lors de son déplacement, il se trouve, même momentanément, dans une zone couverte par une passerelle du réseau LoRa, la procédure de connexion peut être réalisée. Une fois connecté, dans certains modes de réalisation, le terminal conserve les informations de connexion jusqu'à sa réinitialisation éventuelle.

Cela pose des problèmes si le lieu d'installation finale ne se trouve pas dans une zone de couverture radio des équipements passerelles du réseau LoRa.

Un des buts de l'invention est de remédier à des insuffisances/inconvénients de l'état de la technique et/ou d'y apporter des améliorations.

A cette fin, l'invention se rapporte à un procédé de gestion.

Selon l'invention, le procédé de gestion comporte les étapes suivantes mises en oeuvre par un dispositif de transmission apte à communiquer via une liaison radio avec un équipement passerelle formant noeud d'un réseau de télécommunication et configuré pour communiquer avec un serveur de gestion associé via ledit équipement passerelle et via un serveur réseau dudit réseau :
réception en provenance dudit serveur de gestion d'une demande de gestion d'un terminal apte à communiquer via une liaison radio avec un équipement passerelle du réseau et configuré pour communiquer avec un serveur applicatif associé via l'équipement passerelle du réseau et via ledit serveur réseau et ayant établi une session de communication avec le serveur réseau et/ou le serveur applicatif, au moins une clé de session étant partagée entre le terminal et le serveur réseau et/ou le serveur applicatif, ladite demande de gestion contenant au moins un identifiant dudit terminal et ladite au moins une clé de session ;
suite à la réception de la demande de gestion, interception d'au moins un message émis par ledit terminal et émission, en réponse audit message, d'au moins un message de réponse chiffré avec ladite clé de session reçue.

Corrélativement, l'invention se rapporte également à un dispositif de transmission apte à communiquer via une liaison radio avec un équipement passerelle formant noeud d'un réseau de télécommunication et configuré pour communiquer avec un serveur de gestion associé via ledit équipement passerelle et via un serveur réseau dudit réseau.

Selon l'invention, ce dispositif comprend :
un module de réception en provenance dudit serveur de gestion, d'une demande de gestion d'un terminal apte à communiquer via une liaison radio avec un équipement passerelle du réseau et configuré pour communiquer avec un serveur applicatif associé via l'équipement passerelle du réseau et via le serveur réseau et ayant établi une session de communication avec le serveur réseau et/ou le serveur applicatif, au moins une clé de session étant partagée entre le terminal et le serveur réseau et/ou le serveur applicatif, ladite demande de gestion contenant au moins un identifiant dudit terminal et ladite au moins une clé de session ;
un module de traitement configuré pour recevoir, suite à la réception de la demande de gestion, au moins un message émis par ledit terminal et
un module d'émission, en réponse audit message, d'au moins un message de réponse chiffré avec ladite clé de session reçue.

Lors d'une première phase, un terminal situé dans la zone de couverture radio d'un équipement passerelle du réseau établit une session de communication avec un serveur réseau du réseau et/ou avec un serveur applicatif associé au terminal. Cette session de communication permet au terminal de communiquer via le serveur réseau avec un serveur applicatif associé au terminal.

Lors d'une seconde phase lors de laquelle le terminal est situé hors de la zone de couverture radio d'un équipement passerelle du réseau, les signaux radio émis par le terminal ne sont reçus par aucun équipement passerelle du réseau. De ce fait, ils ne parviennent pas au serveur applicatif.

Une demande de gestion transmise par un serveur de gestion à un dispositif de transmission positionné dans la zone de couverture du terminal permet à ce dispositif de transmission de relayer d'une part les messages émis par un terminal vers un équipement passerelle et d'autre part les messages destinés à ce terminal.

Suite à la réception de cette demande de gestion, le dispositif de transmission intercepte au moins un message émis par le terminal.

Grâce à la clé de session reçue dans la demande de gestion, il peut émettre, en réponse à un message émis par le terminal, un ou plusieurs messages à destination du terminal. Ces messages sont chiffrés avec la clé de session. Ils sont similaires aux messages qui sont émis par le serveur réseau.

Le terminal peut ainsi continuer à communiquer avec le serveur applicatif via le serveur réseau. Il n'est pas nécessaire d'intervenir sur le terrain pour réinitialiser le terminal.

Le dispositif de transmission ne traite que les messages provenant de terminaux pour lesquels il a obtenu des droits de gestion. Ces droits de gestion sont ici transmis sous la forme d'une demande de gestion.

Le dispositif de transmission, appelé également dispositif répéteur, est positionné dans la zone de couverture radio du terminal pour permettre à ce terminal d'accéder au réseau et de communiquer avec un serveur applicatif associé au terminal via le serveur réseau. Grâce à ce dispositif de transmission, un terminal configuré pour se connecter au réseau mais ne pouvant accéder directement via une liaison radio à un équipement passerelle du réseau, peut communiquer avec le serveur réseau et en conséquence avec un serveur applicatif via le serveur réseau.

Le réseau est par exemple un réseau LoRa^{™}.

Le dispositif de transmission se comporte vis-à-vis du réseau comme un terminal. Ainsi, il communique avec un équipement passerelle via des signaux radios, par exemple des signaux radio longue portée. L'équipement passerelle relaie les informations venant du dispositif de transmission vers le serveur réseau. Le serveur réseau est ensuite apte à relayer ces informations vers un serveur de gestion associé au dispositif de transmission si les informations sont destinées à ce serveur. Réciproquement, les informations provenant du serveur de gestion et destinées au dispositif de transmission sont transmises à ce dispositif via le ou les serveurs de réseau et via l'équipement passerelle.

Avantageusement, les liaisons de communications entre les différents serveurs et entre un serveur du réseau et un équipement passerelle sont des liaisons filaires ou cellulaires classiques.

Cependant, aucune limitation n'est apportée au type de ces liaisons.

Avantageusement, la liaison entre le dispositif de transmission et le terminal est une liaison radio longue portée selon la technologie LoRa. Ainsi, les terminaux configurés pour respecter le protocole LoRaWAN^{™} peuvent accéder via un réseau LoRa à des serveurs applicatifs via le dispositif de transmission sans qu'il soit nécessaire de les adapter.

Cependant, la liaison entre le dispositif de transmission et le terminal peut être une liaison radio ayant des caractéristiques différentes, par exemple une liaison radio courte portée.

Dans un mode de réalisation, une session de communication est établie entre le dispositif de transmission et le serveur réseau.

Cet établissement de session peut comporter une authentification mutuelle entre le dispositif de transmission et le serveur réseau et/ou être basé sur des secrets partagés, typiquement une clé.

Cette session est par exemple établie suite à l'émission par le dispositif de transmission d'une requête de connexion.

Cette session de communication permet au dispositif de transmission et à un serveur de gestion identifié dans la demande de connexion de communiquer via le serveur réseau de façon sécurisée. Le serveur de gestion représente un serveur applicatif associé au dispositif de transmission.

Selon un mode de réalisation particulier du procédé de gestion, la demande de gestion est reçue via ledit équipement passerelle et via le serveur réseau.

Ainsi, le dispositif de transmission reçoit la demande de gestion via une liaison radio. Il n'est donc pas nécessaire de prévoir d'autres moyens de communication, tels que par exemple une liaison filaire, une liaison 4G... entre le dispositif de transmission et le serveur de gestion.

Avantageusement, la demande de gestion est transmise suite à l'établissement d'une session de communication entre le dispositif de transmission et le serveur réseau et/ou le serveur de gestion. Ceci permet un envoi sécurisé de la demande de gestion.

Selon un mode de réalisation particulier du procédé de gestion, ledit au moins un message de réponse contient au moins un paramètre de configuration du terminal, et plus particulièrement d'un module de communication radio du terminal.

L'envoi de paramètres de configuration permet au terminal d'adapter la configuration des signaux radios émis ou reçus par le terminal aux contraintes du dispositif de transmission. Cette adaptation permet d'optimiser la liaison radio entre le terminal et le dispositif de transmission.

Selon une caractéristique particulière, ledit au moins un paramètre de configuration comprend une liste d'au moins un canal radio à valider ou à invalider par le terminal.

Selon une configuration particulière, le terminal émet chaque message à émettre, successivement sur plusieurs canaux dans le but qu'un équipement reçoive ce message sur un des canaux sur lequel il écoute.

Lors de l'établissement d'une session de communication entre un terminal et un équipement, par exemple un serveur, cet équipement peut fournir au terminal une liste de canaux sur lequel il écoute ou au contraire une liste de canaux sur lequel il n'écoute jamais. Ces listes sont liées aux capacités de l'équipement.

La transmission par le dispositif de transmission ayant reçu la demande de gestion d'une liste de canaux à valider ou à invalider permet au terminal d'adapter la liaison radio aux capacités du dispositif de transmission.

Selon une autre caractéristique particulière, utilisée seule ou en combinaison avec la précédente, ledit au moins un paramètre de configuration comprend un moins une valeur de délai à respecter entre un message émis et un message reçu par le terminal.

Lors de l'établissement d'une session de communication entre un terminal et un équipement, cet équipement peut indiquer au terminal un délai dans lequel il envisage de répondre. Lors d'une session de communication établie entre un terminal et un équipement passerelle, ce délai de réponse est par exemple de l'ordre de la seconde.

Lorsque le terminal communique avec le serveur réseau via un dispositif de transmission, ce délai initialement configuré peut ne pas être suffisant, par exemple pour réaliser un relayage des messages. L'envoi d'une nouvelle valeur de délai permet au terminal d'adapter ses moments d'écoute d'une réponse après émission d'un message. Cela permet par exemple d'allonger le délai d'attente ou de le décaler dans le temps.

Selon un mode de réalisation particulier du procédé de gestion, ledit au moins un message de réponse contient une demande d'émission par ledit terminal d'une demande de connexion.

L'envoi d'une demande de connexion au terminal a pour but de provoquer l'envoi d'une nouvelle demande de connexion par le terminal et, en conséquence, l'établissement d'une nouvelle session de communication. Lors de cet établissement de session de communication, une ou plusieurs clés de session seront générées. Ceci permet d'éviter le piratage de la ou des clé(s) de session générées précédemment et transmises au dispositif de transmission dans la demande de gestion. La sécurité est ainsi renforcée.

Ce mode de réalisation est particulièrement adapté aux terminaux non configurés pour émettre de leur propre initiative une nouvelle requête de connexion lorsqu'ils ne reçoivent plus de réponses aux messages qu'ils émettent.

L'envoi d'une demande de connexion au terminal permet d'établir rapidement une nouvelle session.

Selon un mode de réalisation particulier du procédé de gestion, la demande de gestion contient des données d'authentification permettant un établissement par ledit dispositif de transmission d'une session de communication avec le terminal.

La transmission de données d'authentification permet au dispositif de transmission de se substituer au serveur réseau pour établir avec le terminal une session de communication avec le terminal.

Selon un mode de réalisation particulier, le procédé de gestion comporte, suite à l'émission dudit au moins un message de réponse, une étape de réception d'une demande de connexion émise par ledit terminal et une étape d'établissement d'une session de communication entre ledit terminal et ledit dispositif de transmission.

Selon un mode de réalisation particulier, le procédé de gestion comporte, suite à l'établissement de la session de communication entre ledit terminal et ledit dispositif de transmission, une étape d'envoi au serveur réseau, de données d'établissement de ladite session de communication.

Ces données d'établissement de session sont des données utilisées pour établir la session de communication entre le terminal et le dispositif de transmission. Ces données sont des données générées par le terminal et communiquées par celui-ci au dispositif de transmission ou des données générées par le dispositif de transmission.

Ces données d'établissement de session contiennent par exemple la clé de session ou des données, par exemple une ou plusieurs valeurs aléatoires, nécessaires pour calculer la clé de session.

Grâce aux données d'établissement de session, le serveur réseau peut agir comme s'il avait lui-même établi la session de communication.

La communication entre le terminal et un serveur applicatif associé, via le serveur réseau, est ainsi réalisée de façon transparente pour le terminal et pour le serveur applicatif.

Dans un mode de réalisation particulier, le serveur réseau transfère les données reçues au serveur de gestion. Ce serveur de gestion interprète la réception de ces données comme une preuve de la connexion du terminal au réseau. Il informe alors le serveur réseau de cette connexion en lui communiquant des informations relatives à cette connexion. Ces informations sont enregistrées dans une mémoire accessible par le serveur réseau. Ainsi, le serveur de réseau ne rejettera pas les messages destinés au serveur applicatif émis par ce terminal.

Les données d'établissement de session peuvent également être transmises au serveur applicatif par le serveur de gestion.

Suite à la mise à disposition par le serveur de gestion, des données de session d'établissement, le serveur réseau et éventuellement le serveur applicatif disposent des mêmes informations que celles qui auraient été obtenues par le serveur réseau et le serveur applicatif dans le cas d'une connexion directe d'un terminal avec un équipement passerelle, c'est-à-dire dans le cas d'un terminal se trouvant dans la zone de couverture d'un équipement passerelle.

Avantageusement, les informations de connexion enregistrées contiennent la ou les clés de session générée pour cette connexion. Le serveur réseau peut, grâce à cette clé de session, authentifier, chiffrer et déchiffrer les messages de données en provenance ou à destination du terminal et retransmis dans chaque sens par le dispositif de transmission.

Après cette phase de connexion, le dispositif de transmission retransmet via le réseau à destination du serveur applicatif, les messages destinés à ce serveur applicatif et émis par le terminal. De manière symétrique, le dispositif de transmission retransmet au terminal les messages destinés à ce terminal et transmis via le réseau par le serveur applicatif. De manière équivalente, le dispositif de transmission retransmet au serveur réseau, les messages destinés à ce serveur réseau et émis par le terminal, ainsi que les messages en provenance du serveur réseau à destination du terminal.

Ce dispositif de transmission permet ainsi au terminal de communiquer avec le réseau et le serveur applicatif auquel il est rattaché. Il joue ainsi le rôle de relais.

Aucune modification n'est nécessaire au niveau du terminal.

Le dispositif de transmission est peu onéreux. Il n'est pas nécessaire qu'il comporte un module de connexion filaire ou cellulaire. Il communique d'une part avec un ou plusieurs terminaux et d'autre part avec une passerelle de réseau via une liaison radio. Ce moyen de communication est peu consommateur en énergie pour le dispositif de transmission. Ainsi, il n'est pas nécessaire de raccorder le dispositif de transmission à une prise de courant électrique. Une batterie ou des piles sont suffisantes pour l'alimenter. Ceci facilite son installation.

Selon une caractéristique particulière du procédé de gestion, la demande de gestion est reçue en réponse à un message émis par le dispositif de transmission.

Ce mode de réalisation est particulièrement adapté au cas où le serveur du réseau ne peut pas interroger directement les terminaux connectés au réseau, et plus particulièrement ici le dispositif de transmission. Dans ce mode de réalisation, le dispositif de transmission émet périodiquement des messages destinés au serveur réseau. Le serveur réseau peut alors communiquer des informations au dispositif de transmission en répondant à un tel message.

L'invention se rapporte également à un produit programme d'ordinateur comprenant des instructions pour la mise en oeuvre d'un procédé de gestion tel que décrit précédemment, lorsque ce programme est exécuté par un processeur.

L'invention concerne ainsi un logiciel ou programme, susceptible d'être exécuté par un ordinateur ou par un processeur de données, ce logiciel / programme comportant des instructions pour commander l'exécution des étapes d'un procédé de gestion. Ces instructions sont destinées à être stockées dans une mémoire d'un dispositif informatique, chargées puis exécutées par un processeur de ce dispositif informatique.

Ce logiciel / programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Le dispositif informatique peut être mis en oeuvre par une ou plusieurs machines physiquement distinctes et présente globalement l'architecture d'un ordinateur, incluant des constituants d'une telle architecture : mémoire(s) de données, processeur(s), bus de communication, interface(s) matérielle(s) pour la connexion de ce dispositif informatique à un réseau ou un autre équipement, interface(s) utilisateur, etc.

L'invention concerne aussi un support d'informations lisible par un processeur de données, et comportant des instructions d'un programme tel que mentionné ci-dessus. Le support d'informations peut être n'importe quelle entité ou dispositif capable de stocker le programme.

D'autres particularités et avantages de la présente invention apparaitront dans la description suivante de modes de réalisation donnés à titre d'exemple non limitatif, en référence aux dessins annexés, dans lesquels :
- la figure 1 est un schéma illustrant un système dans un premier état de configuration et selon un mode de réalisation particulier de l'invention ;
- la figure 2 est un schéma illustrant le système de la figure 1 dans un deuxième état de configuration ;
- la figure 3 est un schéma représentant un dispositif de transmission apte à mettre en oeuvre un procédé de transmission selon un mode de réalisation de l'invention ;
- la figure 4 est un organigramme illustrant les différentes étapes d'un procédé de gestion selon un premier mode de réalisation particulier de l'invention ;
- la figure 5 est un organigramme illustrant les différentes étapes d'un procédé de gestion selon un deuxième mode de réalisation particulier de l'invention.

L'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en oeuvre une fonction ou un ensemble de fonctions, selon ce qui est décrit ci-dessous pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique (terminal, serveur, passerelle, set-top-box, routeur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou avec processeur intégré pour l'exécution de logiciel, par exemple un circuit intégré, une carte à puce, une carte électronique pour l'exécution d'un micrologiciel (firmware), etc.

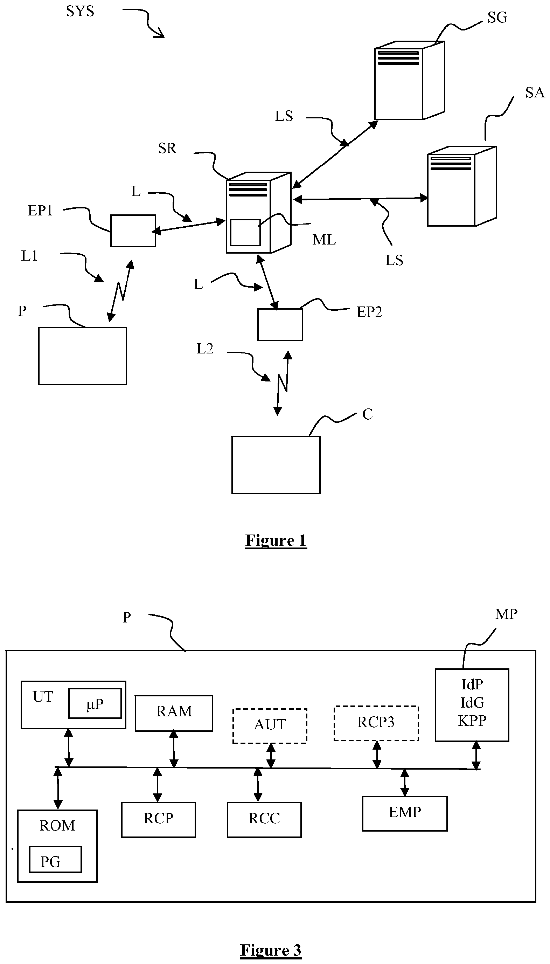

La **figure 1** représente un système de communication SYS conforme à l'invention, dans un mode particulier de réalisation.

Dans l'exemple envisagé à la figure 1, le système de communication SYS s'appuie sur un réseau de télécommunications étendu mettant en oeuvre le protocole LoRaWAN^{™}. De façon connue, le protocole LoRaWAN^{™} est particulièrement bien adapté dans le contexte de l'Internet des Objets pour permettre à divers objets communicants d'échanger avec des serveurs sur Internet.

Aucune limitation n'est attachée à la nature des objets communicants. Il peut s'agir de terminaux divers tels que des capteurs, des actionneurs, ou tout autre type d'objet. De façon connue, de tels objets, par leurs contraintes matérielles et/ou logicielles, ne peuvent pas se connecter par des réseaux d'accès classiques tels que Wifi, cellulaire ou filaire au réseau Internet pour accéder aux serveurs applicatifs auxquels ils sont rattachés : ils communiquent avec ces serveurs par l'intermédiaire d'un réseau de télécommunications adapté à leurs contraintes, tel que LoRaWAN^{™}, selon une topologie en étoile.

Le système de communication SYS comprend au moins un dispositif de transmission P, au moins un terminal C, au moins un équipement passerelle, un serveur de réseau SR, un serveur de gestion SG et au moins un serveur applicatif SA.

Le système de communication SYS comprend par exemple 2 équipements passerelle EP1 et EP2.

Aucune limitation n'est attachée au nombre de serveurs applicatifs, au nombre de dispositifs de transmission, au nombre d'équipements passerelle ou au nombre de terminaux.

Le serveur réseau SR est apte à communiquer d'une part avec le serveur de gestion SG et d'autre part avec le serveur applicatif SA via une liaison LS.

La liaison LS est par exemple une liaison filaire.

La liaison LS est de préférence sécurisée.

L'équipement passerelle EP1, respectivement l'équipement passerelle EP2, est apte d'une part à communiquer avec un ou plusieurs terminaux via un lien radio et d'autre part, à communiquer avec le serveur réseau SR ou d'autres équipements du réseau via une liaison de communication L.

La liaison de communication L est par exemple une liaison filaire ou cellulaire.

Aucune limitation n'est apportée ni au type de la liaison LS ni au type de la liaison L.

De façon connue, le serveur de réseau SR est chargé de filtrer et de contrôler l'intégrité et l'authenticité des messages reçus via la liaison L avant de les transmettre aux serveurs applicatifs concernés.

Le serveur de réseau SR a également accès à une mémoire ML contenant une liste LT des terminaux connectés. La liste LT comprend notamment pour chaque terminal connecté, un identifiant dudit terminal en association avec des informations relatives à la session de communication établie pour ce terminal. Ces informations sont par exemple un identifiant du serveur applicatif avec lequel il est connecté, une ou plusieurs clés de session, une adresse attribuée au terminal connecté ...

Les informations contenues dans la liste LT permettent au serveur de réseau SR d'effectuer des contrôles d'intégrité avant de transmettre ou non un message reçu.

Les informations enregistrées pour un terminal connecté sont par exemple retirées de la liste LT en fin de session de communication.

Les données échangées entre les différents serveurs SR, SA et SG du réseau R sont indifféremment chiffrées avec des clés partagées ou des paires de clés privées-publiques ou tout autre procédé de chiffrement ou transmises en clair. Aucune limitation n'est apportée à la façon dont ces données sont échangées.

Le terminal C est configuré pour communiquer avec le serveur applicatif SA via le serveur de réseau SR, et via éventuellement des passerelles ou stations de base.

Plus précisément, le terminal C est configuré pour émettre et à recevoir des données via un lien radio.

Le terminal C est par exemple un compteur d'eau.

Le serveur applicatif SA est par exemple un serveur d'un fournisseur d'eau apte à traiter les données remontées par le compteur d'eau C et à fournir un service applicatif. Ce service applicatif est par exemple l'élaboration d'une facture à partir des données remontées, et la fourniture de cette facture à un utilisateur associé au compteur C. L'utilisateur peut par ailleurs se voir fournir un historique détaillé de ses consommations sur un portail web du fournisseur d'eau...

Le terminal C est configuré pour communiquer avec le serveur applicatif SA via le serveur de réseau SR, et via éventuellement des passerelles ou stations de base.

Cela signifie que lorsqu'il est installé dans une zone de couverture radio d'un équipement passerelle, par exemple l'équipement passerelle EP2, il peut communiquer avec le serveur applicatif SA via une liaison radio L2 entre le terminal et cet équipement passerelle EP2, via l'équipement passerelle EP2, la liaison L, le serveur réseau SR et la liaison LS.

A cet effet, le terminal C comporte une mémoire dans laquelle ont été enregistrés lors d'une phase préalable d'initialisation, un identifiant IdC du terminal C, un identifiant IdS du serveur applicatif SA associé au terminal C et une clé cryptographique principale (ou maîtresse) KPC. La clé principale KPC est par exemple stockée dans une mémoire sécurisée du terminal C.

La clé principale KPC est également stockée dans une mémoire sécurisée du serveur réseau SR, par exemple en association avec l'identifiant IdC du terminal C et l'identifiant IdS du serveur applicatif SA.

Le dispositif de transmission P, est configuré pour communiquer avec le serveur de gestion SG via le serveur de réseau SR, et via un équipement passerelle.

Le dispositif de transmission P communique dans l'exemple représenté ici avec l'équipement passerelle EP1 via un lien radio L1.

Le dispositif de transmission P est également apte à recevoir les signaux radio émis par un ou plusieurs terminaux, pour lesquels il a obtenu des droits de gestion, par exemple sous la forme d'une demande de gestion telle que décrite ultérieurement, et à émettre des signaux radio.

La figure 1 représente un exemple d'un premier état de configuration du système SYS.

Sur cette figure, le terminal C est situé à proximité de l'équipement passerelle EP2 et peut communiquer avec cet équipement passerelle EP2 via une liaison radio L2.

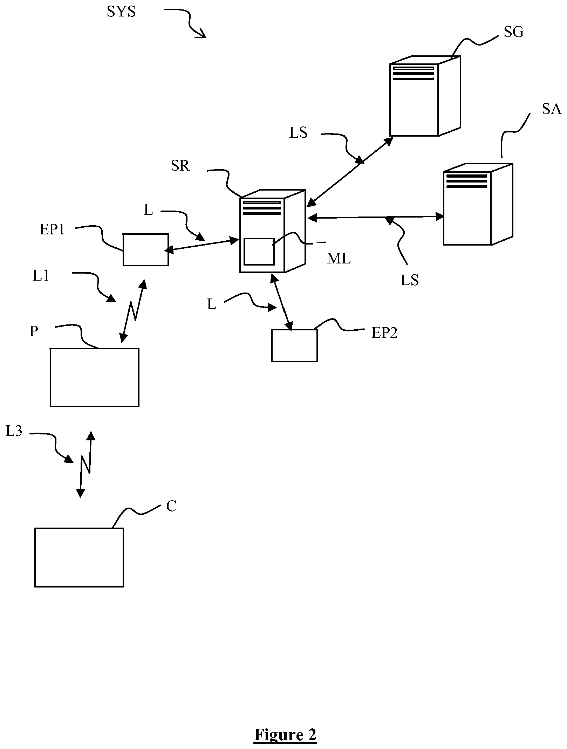

La **figure 2** représente un exemple d'un deuxième état de configuration du système SYS.

Sur cette figure, le terminal C est maintenant situé à proximité du dispositif de transmission P.

Le terminal C a par exemple été déplacé. Il est supposé ici que le terminal C est maintenant installé dans une zone, appelée zone blanche, où il n'accède directement ni à un serveur du réseau, ni à un équipement passerelle. Plus précisément, les signaux radio émis par le terminal C ne parviennent pas jusqu'à un équipement passerelle EP1, EP2 du réseau.

Le terminal C est par exemple situé en sous-sol, par exemple dans une cave d'un immeuble, dans un bâtiment en tôle...

Le terminal C et le dispositif de transmission P communiquent alors via une liaison radio L3.

Dans le mode de réalisation décrit, les liaisons radio L1, L2 et L3 sont des liens selon la technologie bas débit et basse consommation LoRa. Les signaux radio émis et reçus sont des signaux bas débit (inférieurs à 50Kbits/s) de longue portée (ie de type Long range).

A titre d'alternative, une ou plusieurs des liaisons L1, L2 et L3 sont de liaisons radio de type différent.

Comme illustré sur la **figure 3**, le dispositif de transmission P comporte de façon connue, notamment une unité de traitement UT équipée d'un microprocesseur, une mémoire morte de type ROM, une mémoire vive de type RAM.

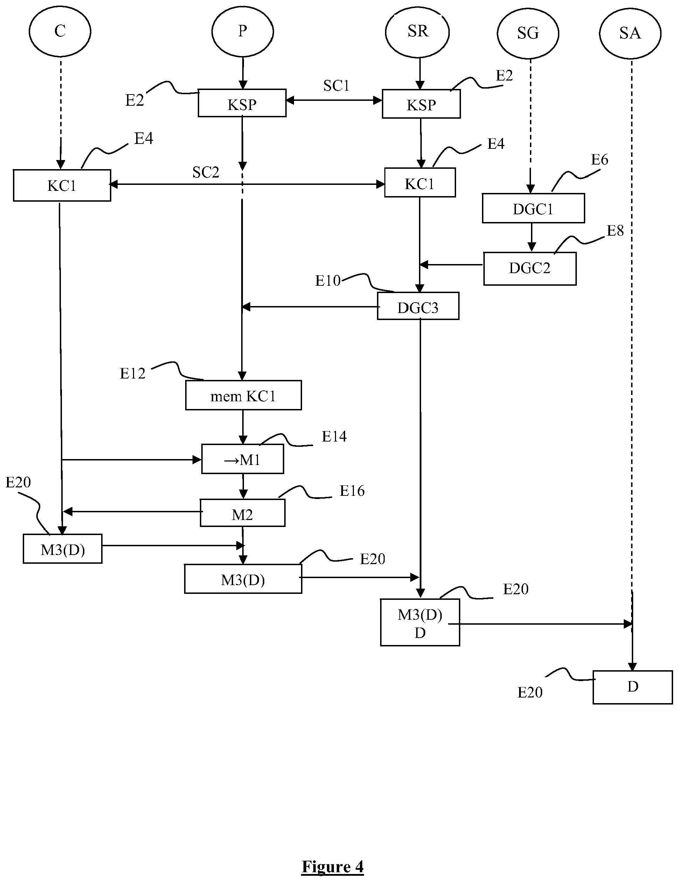

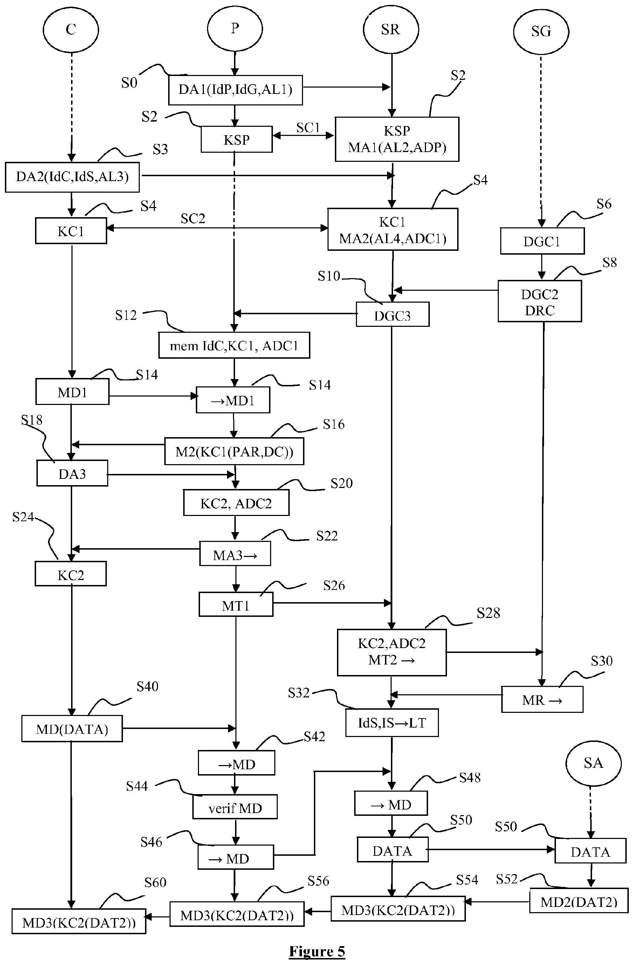

La mémoire morte de type ROM comporte des registres mémorisant un programme d'ordinateur PG comportant des instructions de programme adaptées à mettre en oeuvre un procédé de gestion selon un mode de réalisation de l'invention décrit ultérieurement en référence à la figure 4 et à la figure 5.

Le dispositif de transmission P comporte également une mémoire MP, par exemple une mémoire sécurisée, dans laquelle ont été enregistrés lors d'une phase préalable d'initialisation, par exemple lors de son installation, un identifiant IdP du dispositif de transmission P, un identifiant IdG du serveur de gestion SG associé au dispositif de transmission P et une clé cryptographique principale (ou maîtresse) KPP. La clé principale KPP est une clé associée au serveur de gestion SG. Elle est partagée par le dispositif de transmission P et par le serveur réseau SR.

Le dispositif de transmission P comporte également un premier module de réception RCP, un deuxième module de réception RCC, un module d'émission EMC.

Le premier module de réception RCP est configuré pour recevoir des signaux radios émis via la liaison L1, typiquement par l'équipement passerelle EP1.

Le deuxième module de réception RCC est configuré pour recevoir des signaux radio émis par le terminal C.

Le module d'émission EMC est configuré pour émettre des signaux radio.

Le dispositif de transmission P peut également comporter un module d'authentification AUT et un troisième module de réception RCP3. Le troisième module de communication RCP3 est configuré pour communiquer directement avec le serveur de gestion SG, par exemple via une liaison filaire ou cellulaire.

Un premier mode de réalisation d'un procédé de gestion mis en oeuvre dans le système SYS, va maintenant être décrit en référence à la **figure 4**.

Lors d'une étape E2, le dispositif de transmission P et le serveur réseau SR établissent entre eux une session de communication SC 1.

L'établissement de la session de communication SC1 comprend la génération d'une clé de session KSP d'une part par le dispositif de transmission P et d'autre part par le serveur réseau SR.

La clé de session KSP est générée à partir de la clé principale KPP.

Des informations relatives à la session établie SC1 sont enregistrées en association avec un identifiant du dispositif de transmission P par le serveur réseau SR dans une mémoire accessible par le serveur réseau, par exemple dans la liste LT de la mémoire ML.

De façon connue, l'établissement de la session SC1 permet au dispositif de transmission P de transmettre des messages de données à destination du serveur de gestion SG. Les messages de données contiennent un identifiant IdP du dispositif de transmission P, un identifiant IdG du serveur de gestion SG et des données chiffrées avec la clé de session KSP. Les messages de données sont reçus par le serveur réseau SR qui déchiffre les données avec sa clé de session KC1. Le serveur réseau SR transmet ensuite, via la liaison LS, les données déchiffrées au serveur de gestion SG associé au dispositif de transmission P.

De façon réciproque, le serveur de gestion SG peut transmettre un message en réponse à un message reçu du dispositif de traitement P. Ce message est transmis par le serveur de gestion SG au serveur réseau SR qui chiffre son contenu avec la clé de session KSP avant de le transmettre à destination du dispositif de transmission P.

Lors d'une étape E4, une session de communication SC2 est établie entre le terminal C et le serveur réseau SR.

L'établissement de la session de communication SC2 comprend la génération d'une clé de session KC1 d'une part par le terminal C et d'autre part par le serveur réseau SR.

La clé de session KC1 est générée à partir de la clé principale KPC.

Des informations relatives à la session établie SC2 sont enregistrées en association avec un identifiant IdC du terminal C par le serveur réseau SR par exemple dans la liste LT des terminaux connectés.

De façon connue, l'établissement de la session SC2 permet au terminal C de transmettre des messages de données à destination du serveur applicatif SA. Les messages de données contiennent un identifiant IdC du terminal C, un identifiant du serveur applicatif SA et des données chiffrées avec la clé de session KC1. Les messages de données sont reçus par le serveur réseau SR qui déchiffre les données avec sa clé de session KC1. Le serveur réseau SR transmet ensuite, via la liaison LS, les données déchiffrées au serveur applicatif SA associé au terminal C.

De façon réciproque, le serveur applicatif SA peut transmettre un message en réponse à un message reçu du terminal C. Ce message est transmis par le serveur applicatif SA au serveur réseau SR qui chiffre son contenu avec la clé de session KC1 avant de le transmettre à destination du terminal C.

Lors d'une étape E6, le serveur de gestion SG obtient une demande de gestion DGC1 relative au terminal C.

La demande de gestion DGC1 est par exemple obtenue par le serveur de gestion SG suite une action d'un utilisateur, typiquement un opérateur. La demande de gestion DGC du terminal C est, par exemple saisie par l'opérateur via une interface utilisateur affichée sur un écran du serveur de gestion SG ou d'un terminal associé au serveur de gestion SG.

Cette action est par exemple effectuée suite à une alerte émise par le serveur applicatif SA. Cette alerte est par exemple déclenchée par le serveur applicatif SA suite à la non réception pendant un intervalle de temps prédéfini de messages de données en provenance du terminal C.

Ce manque de réception de données est interprété par le serveur applicatif SA comme un problème de couverture radio du terminal C.

L'absence de réception de messages de données peut provenir du déplacement, c'est-à-dire d'un changement de position, du terminal C, du déplacement de l'équipement passerelle EP2 se trouvant initialement à proximité du terminal C, de la construction d'un ou plusieurs murs entre le terminal C et l'équipement passerelle EP2...

La demande de gestion DGC1 contient un identifiant du terminal C, par exemple l'identifiant IdC, et un identifiant du dispositif de gestion P, par exemple l'identifiant IdP.

Dans le cas où le système SYS contient une pluralité de dispositifs de transmission, le dispositif de transmission P est choisi par l'opérateur parmi les dispositifs de transmission de la pluralité.

A titre d'alternative, la demande de gestion DGC1 ne contient pas d'identifiant de dispositif de transmission P et le dispositif de transmission P est sélectionné par le serveur de gestion SG parmi une pluralité de dispositifs de transmission en fonction d'un ou plusieurs critères prédéfinis. Le dispositif de transmission choisi est par exemple le dispositif de transmission le plus proche de l'emplacement connu du terminal C. Ceci suppose qu'une position de chaque dispositif de transmission et que la position du terminal C sont à la disposition du serveur de gestion SG.

Aucune limitation n'est attachée au choix du dispositif de transmission P.

L'étape E6 est suivie d'une étape E8 lors de laquelle le serveur de gestion SG envoie au serveur réseau SR, une demande de gestion DGC2 du terminal C par le dispositif de transmission P. La demande de gestion DGC2 contient un identifiant du terminal C, par exemple l'identifiant IdC, et un identifiant du dispositif de gestion P, par exemple l'identifiant IdP.

L'étape E8 est suivie d'une étape E10 lors de laquelle le serveur réseau SR envoie à destination du dispositif de transmission P, une demande de gestion DGC3 du terminal C.

La demande de gestion DGC3 est par exemple transmise au dispositif de transmission P en réponse à un message transmis par celui-ci.

La demande de gestion DGC3 contient l'identifiant IdC du terminal C et la clé de session KC1 générée lors de l'étape d'établissement de la session de communication SC2 entre le terminal C et le serveur réseau SR.

En alternative, la demande de gestion DGC3 contient également des données utilisées par le serveur réseau SR pour communiquer avec le terminal C. Ces données comprennent par exemple des valeurs de compteurs de trames, ou plus généralement des valeurs utilisées pour éviter une attaque par rejeu.

La clé de session KC2 est par exemple extraite de la liste LT des terminaux connectés, par le serveur réseau SR.

Dans un mode de réalisation particulier, la demande de gestion DGC3 contient également des données d'authentification telles que par exemple la clé principale KPC associée au terminal C.

Suite à la réception de la demande de gestion DGC3 par le premier module de réception RCP du dispositif de transmission P, les valeurs contenues dans la demande de gestion DGC3 sont enregistrées dans une mémoire du dispositif de transmission P (étape E12).

Ultérieurement, lors d'une étape E14, le deuxième module de réception RCC du dispositif de transmission P reçoit un message M1 émis par le terminal C et destiné au serveur applicatif SA.

Le message M1 est par exemple un message contenant des données, par exemple des données de mesure, chiffrées avec la clé de session KC1.

L'étape E14 est suivie d'une étape E16 lors de laquelle le module d'émission EMC du dispositif de transmission P transmet au terminal C, un ou plusieurs messages M2. Ces messages M2 sont chiffrés par le dispositif de transmission P avec la clé de session KC1.

Les messages M2 contiennent des paramètres de configuration du terminal C. Ces paramètres de configuration permettent de modifier un ou plusieurs paramètres de la session de communication SC2. Ils permettent par exemple de reconfigurer les signaux radio émis ou reçus par ledit terminal.

Les paramètres de configuration contenus dans le ou les messages M2 comprennent par exemple une liste de canaux supportés par le dispositif de transmission P et/ou une liste de canaux à invalider car non supportés par le dispositif de transmission P.

Ces paramètres de configuration permettent au terminal C de mettre à jour la liste de canaux radio sur lequel le terminal C émet les messages.

Les paramètres de configuration contenus dans le ou les messages M2 peuvent également comprendre une ou plusieurs valeurs de délais de réponse. Ces valeurs de délais de réponse permettent de définir des intervalles de temps suivant l'émission d'un message pendant lesquels le terminal C est en écoute d'une réponse.

Suite à la réception des paramètres de configuration, le terminal C prend en compte ces nouveaux paramètres de configuration.

L'étape E16 est suivie d'une ou plusieurs étapes E20 lors desquelles le terminal C communique avec le serveur applicatif SA via le dispositif de transmission P et le serveur réseau SR.

Plus précisément, les messages M3 émis par le terminal C à destination du serveur applicatif SA comprennent des données D préalablement signées par le terminal C avec la clé de session KC1. Ils sont interceptés par le dispositif de transmission P et réémis par celui-ci à destination du serveur réseau SR.

Le serveur réseau SR déchiffre ces messages M3 à l'aide de la clé KC1 qu'il détient et transmet leur contenu déchiffré D au serveur applicatif SA.

De façon réciproque, les messages transmis par le serveur applicatif SA sont chiffrés avec la clé de session KC1 par le serveur réseau SR et transmis par celui-ci à destination du terminal C. Ces messages sont reçus par le dispositif de transmission P qui les transfère au terminal C.

Dans une variante de réalisation, les messages M2 transmis par le dispositif de transmission P lors de l'étape E16 comprennent également une demande DC d'émission d'une nouvelle demande de connexion.

Suite à la réception de la demande DC, le terminal C réémet une nouvelle demande de connexion.

La demande de connexion émise par le terminal C est interceptée par le dispositif de transmission P et une session de communication SC3 est établie entre le dispositif de transmission P et le terminal C.

L'établissement de la session de communication SC3 comprend la génération d'une clé de session KC2 d'une part par le dispositif de transmission P et d'autre part par le terminal C.

Suite à l'établissement de cette session de communication SC3, les messages transmis par le terminal C sont signés avec la clé de session KC2.

Ces messages sont interceptés par le dispositif de transmission P.

Ces messages ou le contenu de ceux-ci sont ensuite transmis par le dispositif de transmission P au serveur réseau SR.

Aucune limitation n'est apportée à la transmission du contenu de ces messages.

A titre d'exemple, les messages reçus du terminal C sont déchiffrés par le dispositif de transmission P à l'aide de la clé de session KC2 puis chiffrés avec la clé de session KSP partagée par le dispositif de transmission P et le serveur réseau SR avant d'être transmis au serveur réseau SR.

De façon réciproque, les messages transmis par le serveur applicatif SA sont chiffrés avec la clé de session KSP par le serveur réseau SR et transmis par celui-ci à destination du terminal C. Ces messages sont reçus par le dispositif de transmission P qui les déchiffre avec la clé de session KSP, les chiffrent avec la clé de session KC2 et les émet à destination du terminal C.

Dans cette variante de réalisation, les messages M2 comprennent des paramètres de configuration du terminal et une demande de connexion DC.

A titre d'alternative, les messages M2 comprennent la demande de connexion DC mais ne comprennent pas de paramètres de configuration du terminal.

Dans le mode de réalisation décrit, la demande de gestion DGC3 est transmise au dispositif de transmission P via le serveur réseau SR et l'équipement passerelle EP1. Elle est dans ce cas reçue par le premier module de réception RCP du dispositif de transmission P.

A titre d'alternative, le dispositif de transmission P comporte également un module de communication filaire ou cellulaire RCP3 et la demande de gestion DGC3 est transmise directement par le serveur de gestion SG au dispositif de transmission P via une liaison filaire ou cellulaire.

La demande de gestion DGC3 est alors reçue par le module de communication RCP3 du disposition de transmission P. Dans le mode de réalisation décrit, la session de communication SC1 est établie entre le dispositif de transmission P et le serveur réseau SR et la session de communication SC2 est établie entre le terminal C et le serveur réseau SR. A titre d'alternative, la session de communication SC1 est établie entre le dispositif de transmission P et le serveur de gestion SG et la session de communication SC2 est établie entre le terminal C et le serveur applicatif SA. Le serveur réseau SR a dans cette alternative un rôle d'aiguillage.

Un deuxième mode de réalisation d'un procédé de gestion mis en oeuvre dans le système SYS, va maintenant être décrit en référence à la **figure 5****.**

Lors d'une étape S0, le module d'authentification AUT du dispositif de transmission P transmet au serveur réseau SR, une requête de connexion DA1. La requête de connexion DA1 est émise par le dispositif de transmission P, via la liaison radio L1. Elle est relayée au serveur de réseau SR par l'équipement passerelle EP1 via la liaison L.

La requête de connexion DA1 contient l'identifiant IdP du dispositif de transmission P, l'identifiant IdG du serveur de gestion SG avec lequel le dispositif de transmission P demande à être connecté et une valeur aléatoire AL1 générée par le dispositif de transmission P.

La requête de connexion DA1 est par exemple un message JoinRequest défini dans le standard LoRaWAN^{™}.

Lors d'une étape S2, suite à la réception de la requête DA1, le dispositif de transmission P et le serveur réseau SR établissent une session de communication SC1.

L'établissement de la liaison de communication SC1 comporte une étape d'authentification réalisée d'une part par le dispositif de transmission P et d'autre part par le serveur réseau SR.

Plus précisément, le serveur réseau SR génère une valeur aléatoire AL2. Puis, il génère une clé de session KSP par application d'une fonction mathématique prédéfinie F1 en utilisant les paramètres suivants : la clé principale KPP, la valeur aléatoire AL1 reçue, la valeur aléatoire AL2.

La génération d'une clé de session, appelée également clé dérivée, à partir d'une clé principale (ou maîtresse) est une technique connue de l'homme du métier et ne sera pas décrite ici.

La fonction F1 est par exemple une fonction AES (pour « Advanced Encryption Standard »).

Aucune limitation n'est apportée à la fonction F1.

Le serveur réseau SR génère également une adresse ADP pour le dispositif de transmission P.

Puis, le serveur réseau SR génère et émet, en réponse à la demande d'authentification DA1, un message MA1 d'acceptation de la connexion. Le message MA1 contient notamment la valeur aléatoire AL2 et l'adresse ADP générée. Il peut également contenir des paramètres de connexion tels que par exemple une liste de canaux valides pour communiquer via la liaison L1 et/ou une liste de canaux à invalider et/ou un temps de réponse maximum dans lequel une réponse à un message émis par le terminal doit être reçue. Ce temps de réponse est par exemple de 1 seconde.

Le message MA1 est par exemple un message JoinAccept défini dans le standard LoRaWAN^{™}.

Des informations relatives à la connexion, c'est-à-dire à la session établie, sont enregistrées par le serveur réseau SR dans la liste LT des terminaux connectés. Ces informations sont par exemple l'identifiant IdP du dispositif de transmission P, l'identifiant IdG du serveur de gestion SG et la clé de session KSP.

Suite à la réception du message MA1, le module d'authentification AUT du dispositif de transmission P génère à son tour la clé de session KSP. La clé de session KSP est générée par application de la fonction F1 à la clé principale KPP stockée dans la mémoire MP du dispositif de transmission P, de la première valeur aléatoire AL1 générée par le dispositif de transmission P et de la deuxième valeur aléatoire AL2 reçue dans le message MA1.

Dans le mode de réalisation décrit, l'établissement de session comporte une authentification mutuelle de dispositif de transmission P et du serveur réseau SR.

A titre d'alternative, la clé de session KSP par exemple générée par un dispositif de sécurité (non représenté) et préalablement enregistrée d'une part dans le dispositif de transmission P et d'autre part, dans le serveur réseau SR.

Suite à l'étape S2, le dispositif de transmission P d'une part et le serveur réseau SR possèdent la même clé de session KSP. En d'autres termes, la clé de session KSP est partagée par le dispositif de transmission P et le serveur réseau SR pour la session de communication entre le dispositif de transmission P et le serveur de gestion SG.

Lors d'une étape S3, le terminal C émet une requête de connexion DA2 au serveur applicatif SA.

La requête de connexion DA2 contient l'identifiant IdC du terminal C, l'identifiant IdS du serveur applicatif SA avec lequel le terminal C demande à être connecté et une valeur aléatoire AL3 générée par le terminal C.

La requête de connexion DA2 est par exemple un message JoinRequest défini dans le standard LoRaWAN^{™}.

L'étape S3 est suivie d'une étape S4 lors de laquelle une session de communication SC2 est établie entre le terminal C et le serveur réseau SR.

Plus précisément, suite à la réception de la requête de connexion DA2, le serveur réseau SR génère une valeur aléatoire AL4, une clé de session KC1 et une adresse ADC1 pour le terminal C. La clé de session KSC1 est générée de façon classique en utilisant la clé principale KPC, la valeur aléatoire reçue AL3 et la valeur aléatoire AL4.

Puis, le serveur réseau SR génère et transmet un message MA2 d'acceptation de la connexion. Le message MA2 contient notamment la valeur aléatoire AL4 et l'adresse ADC1 générée. Il peut également contenir des paramètres de configuration du terminal.

Le message MA2 est par exemple un message JoinAccept défini dans le standard LoRaWAN^{™}.

Des informations relatives à la connexion, c'est-à-dire à la session établie, sont enregistrées par le serveur réseau SR dans la liste LT des terminaux connectés. Ces informations sont par exemple l'identifiant IdC du terminal C, l'identifiant IdS du serveur applicatif SA et la clé de session générée KC1.

Suite à la réception du message MA2, le terminal C génère à son tour la clé de session KC 1.

De façon connue, l'établissement de la session SC2 permet au terminal C de transmettre des messages de données à destination du serveur applicatif SA. Les messages de données contiennent un identifiant IdC du terminal C, un identifiant du serveur applicatif SA et des données chiffrées avec la clé de session KC1. Les messages de données sont reçus par le serveur réseau SR qui déchiffre les données avec sa clé de session KC1 enregistrée dans la liste LT en association avec l'identifiant IdC du terminal C. Le serveur réseau SR transmet ensuite, via la liaison LS, les données déchiffrées au serveur applicatif SA associé au terminal C.

De façon réciproque, le serveur applicatif SA peut transmettre un message en réponse à un message reçu du terminal C. Ce message est transmis par le serveur applicatif SA au serveur réseau SR qui chiffre son contenu avec la clé de session avant de le transmettre à destination du terminal C.

Lors d'une étape S6, similaire à l'étape E6 du mode de réalisation précédent, le serveur de gestion SG reçoit une demande de gestion DGC1 relative au terminal C.

La demande de gestion DGC1 contient un identifiant du terminal C, par exemple l'identifiant IdC, et un identifiant du dispositif de transmission P, par exemple l'identifiant IdP.

L'étape S6 est suivie d'une étape S8 lors de laquelle le serveur de gestion SG envoie au serveur réseau SR, une demande de gestion DGC2 du terminal C par le dispositif de transmission P.

Dans le mode de réalisation décrit, le serveur de gestion SG envoie également au serveur réseau SR, une demande DRC de retrait du terminal C de la liste LT des terminaux connectés.

La demande de gestion DGC2 contient l'identifiant IdC du terminal C et l'identifiant IdP du dispositif de transmission P.

L'étape S8 est suivie d'une étape S10 lors de laquelle le serveur réseau SR envoie à destination du dispositif de transmission P, une demande de gestion DGC3 du terminal C.

La demande de gestion DGC3 est par exemple transmise au dispositif de transmission P en réponse à un message transmis par celui-ci, par exemple un message d'interrogation.

La demande de gestion DGC3 contient l'identifiant IdC du terminal C, l'adresse ADC1 du terminal C générée lors de l'étape d'établissement de la session de communication SC2, la clé de session KC1 également générée lors l'étape d'établissement de la session de communication SC2 et la clé de session principale KP 1 associée au terminal C.

La clé de session KC1 et l'adresse ADC1 du terminal C sont par exemple extraits de la liste LT des terminaux connectés par le serveur réseau SR.

A titre d'alternative, la clé de session KC1 et l'adresse ADC1 du terminal C sont obtenues par le serveur de gestion SG et transmises au serveur réseau SR dans la demande de gestion DGC2. Ces informations sont par exemple à disposition du serveur applicatif SA et transmises par celui-ci au serveur de gestion SG.

Egalement à titre d'alternative, la demande de gestion DGC3 contient également des données utilisées par le serveur réseau SR pour communiquer avec le terminal C. Ces données comprennent par exemple des valeurs de compteurs de trames échangées, par exemple des valeurs « UPLINK » et « DOWNLINK » définies dans le standard LoRaWAN^{™}.

Les données de la demande de gestion DGC3 sont chiffrées par le serveur de réseau SR avec la clé de session KSP partagée par le dispositif de transmission P et le serveur réseau SR.

Suite à la transmission du message DGC3, le serveur réseau SR efface de la liste LT des terminaux connectés, l'identifiant IdC du terminal C ainsi que les informations enregistrées en association avec cet identifiant de terminal.

Suite à la réception de la demande de gestion DGC3, le dispositif de transmission P enregistre les valeurs contenues dans la demande de gestion DGC3 dans une mémoire du dispositif de transmission P (étape S12).

Ultérieurement, lors d'une étape S14, le dispositif de transmission P intercepte un message MD 1 émis par le terminal C et destiné au serveur applicatif SA.

Le message MD1 est par exemple un message contenant des données, par exemple des données de mesure, chiffrées avec la clé de session KC1.

L'étape S14 est suivie d'une étape S16 lors de laquelle le dispositif de transmission P transmet au terminal C, un ou plusieurs messages M2. Ces messages M2 sont chiffrés avec la clé de session KC1.

Ces messages contiennent des paramètres PAR de configuration du terminal et une demande DC d'émission, par le terminal C, d'une nouvelle demande de connexion.

A titre d'alternative, ces messages ne comprennent pas de paramètres de configuration de session.

Les paramètres de configuration PAR contenus dans le message M2 comprennent par exemple une liste de canaux supportés par le dispositif de transmission P et/ou une liste de canaux à invalider car non supportés par le dispositif de transmission P.

La mise à jour de la liste des canaux est par exemple demandée sous la forme d'une demande « New Channel » définie dans le standard LoRaWAN^{™}.

Les paramètres de configuration PAR contenus dans le ou les messages M2 peuvent également comprendre une ou plusieurs valeurs de délais de réponse. Un tel délai de réponse est par exemple un intervalle de temps entre la fin de l'émission d'un message par le terminal C et le début d'une fenêtre de réception pendant laquelle le terminal C est en écoute d'une réponse.

La mise à jour de ce délai est par exemple demandée en utilisant une option « MAC RXTimingSetupReq » définie dans le standard LoRaWAN^{™}.

Suite à la réception de la demande de connexion DC, le terminal C réémet une nouvelle demande de connexion DA3 (étape S18).

La requête de connexion DA3 contient l'identifiant IdC du terminal C, l'identifiant IdS du serveur applicatif SA avec lequel le terminal C demande à être connecté et une valeur aléatoire AL5 générée par le terminal C.

La requête de connexion DA3 est par exemple un message « JoinRequest » défini dans le standard LoRaWAN^{™}.

La requête de connexion DA3 est prise en charge par le dispositif de transmission P (étape S20).

Puis, le terminal C et le dispositif de transmission P établissent une session de communication SC3 lors de laquelle ils s'authentifient mutuellement.

Plus précisément, suite à la réception de la requête de connexion DA3, le dispositif de transmission P génère une valeur aléatoire AL6, une clé de session KC2 et une adresse ADC2 pour le terminal C. La clé de session KC2 est générée de façon classique en utilisant la clé principale KPC, la valeur aléatoire reçue AL5 et la valeur aléatoire AL6 (étape S20).

Puis, le dispositif de transmission P génère et transmet un message MA3 d'acceptation de la connexion. Le message MA3 contient notamment la valeur aléatoire AL6 et l'adresse ADC2 générée. Il peut également contenir des paramètres de configuration du terminal C (étape S22).

Le message MA3 est par exemple un message JoinAccept défini dans le standard LoRaWAN^{™}.

Suite à la réception du message MA3, le terminal C génère à son tour la clé de session KC2 (étape S24).

Lors d'une étape S26, le module d'émission EMP du dispositif de transmission P émet un message MT1 destiné au serveur de gestion SG.

Le message MT1 contient l'identifiant IdC du terminal C, la clé de session KC2 générée par le dispositif de transmission P et l'adresse ADC2 générée. Les données contenues dans le message

MT1 sont chiffrées avec la clé de session KSP partagée entre le dispositif de transmission P et le serveur réseau SR.

En variante, le message MT1 ne contient pas la clé de gestion KC2 mais contient des données permettant de générer cette clé, par exemple les valeurs aléatoires AL5 et AL6.

Dans un mode de réalisation particulier, le dispositif de transmission P commande l'effacement de sa mémoire de la clé KC2 précédemment générée, par exemple après envoi du message MT1.

L'étape S26 est suivie d'une étape S28 lors de laquelle le serveur réseau SR reçoit le message MT1 et obtient la clé de session KC2 et l'adresse ADC2 par déchiffrement des données du message MT1 à l'aide de la clé KSP stockée dans une de ses mémoires.

Le serveur réseau SR transmet ensuite un message MT2 contenant la clé de session KC2 et l'adresse ADC2 au serveur de gestion SG via la liaison LS.

Lors d'une étape E30, le serveur de gestion SG commande l'enregistrement d'informations IS relatives à la session SC3 établie dans la liste LT des terminaux connectés. Pour cela, il transmet au serveur de réseau SR, un message MR contenant l'identifiant IdC du terminal C, la clé de session KC2 et l'adresse ADC2.

L'étape E30 est suivie d'une étape E32 lors de laquelle le serveur réseau SR reçoit le message MR et enregistre des informations IS relatives à la session SC3 établie en association avec l'identifiant IdC du terminal C dans la liste LT des terminaux connectés. Les informations enregistrées sont par exemple l'identifiant IdS du serveur applicatif SA, la clé de session KC2 et l'adresse ADC2.

Dans un mode de réalisation particulier, la clé de session KC2 et l'adresse ADC2 sont également transmises de façon sécurisée au serveur applicatif SA.

Lors d'une étape S40, réalisée après les étapes décrites précédemment, le terminal C ayant des données DATA à transmettre au serveur applicatif SA, génère et émet un message MD.

Les données DATA sont par exemple des données de mesure obtenues par le terminal C.

Plus généralement, les données DATA sont des données que le terminal C souhaite transmettre au serveur applicatif SA et/ou au serveur de réseau SR.

Aucune limitation n'est apportée au type des données DATA du message de données MD.

Le message MD contient l'identifiant IdS du serveur applicatif SA, l'adresse ADC2 du terminal C ainsi que les données DATA chiffrées avec la clé de session KC2 générée par le terminal C.

Le message MD est reçu par le dispositif de transmission P lors d'une étape S42.

Le dispositif de transmission P vérifie que le message MD provient du terminal C et est à destination du serveur applicatif SA (étape S44).

Si la vérification est positive, le dispositif de transmission P commande l'émission du message MD par le dispositif de transmission P (étape S46).

Le message de données MD émis par le terminal C, destiné au serveur applicatif SA et reçu par le dispositif de transmission P est ainsi réémis par ce dernier.

Si la vérification est négative, par exemple si le message MD reçu par le dispositif de transmission P est un message émis par un terminal pour lequel le dispositif de transmission P n'a pas reçu de droits de gestion, par exemple l'identifiant de terminal et la clé principale associée à ce terminal, ou si le message MD émis par le terminal C ne contient pas l'identifiant IdS du serveur applicatif SA, le message n'est pas réémis par le dispositif de transmission P.

Le message MD, réémis par le dispositif de transmission P est reçu par le serveur de réseau SR lors d'une étape S48.

Lors d'une étape S50, le serveur de réseau SR vérifie que le terminal C est inscrit dans la liste LT des terminaux connectés.

A l'aide des données IS enregistrées en association avec l'identifiant IdC du terminal C dans la liste LT, le serveur de réseau SR peut également effectuer des contrôles d'intégrité du message MD.

Si le terminal n'est pas inscrit dans la liste LT ou si le serveur réseau SR considère que les contrôles ne sont pas satisfaisants, le processus de traitement du message MD par le serveur réseau SR s'arrête.

Sinon, le serveur réseau SR obtient les données DATA à l'aide de la clé de session KC2 enregistrée dans la liste LT en association avec l'identifiant IdC du terminal C.

Puis, les données DATA obtenues sont transmises au serveur applicatif SA.

Dans le mode de réalisation décrit, lors de l'étape S46, le message MD est retransmis sans subir de traitement de la part du dispositif de transmission P.

A titre d'alternative, le message MD est chiffré avec la clé de session KSP par le dispositif de transmission P avant d'être transmis.

Les étapes S40 à S50 peuvent être réitérées une ou plusieurs fois.

Une des étapes S50 peut être suivie d'une étape E52 lors de laquelle le serveur applicatif SA ayant des données DAT2 à transmettre au terminal C, génère et transmet un message MD2 à destination du terminal C.

L'étape S52 est par exemple réalisée suite à la réception par le serveur applicatif SA d'un message d'interrogation ou d'un message de données

Le message MD2 est reçu par le serveur réseau SR.

Suite à la réception du message MD2, le serveur réseau SR chiffre les données DAT2 avec la clé de session KC2 et transmet un message MD3 contenant les données DAT2 chiffrées à destination du terminal C (étape S54).

Le message MD3 est reçu par le dispositif de transmission P lors d'une étape E56.

Lors d'une étape E58, le dispositif de transmission P réémet le message MD3 reçu et le message MD3 est reçu par le terminal C lors d'une étape S60.

Dans le mode de réalisation décrit, la clé de session KC2 générée par le dispositif de transmission P est transmise par ce dispositif au serveur réseau SR.

A titre d'alternative, la valeur aléatoire AL5 générée par le terminal C et la valeur aléatoire AL6 générée par le dispositif de transmission P sont transmises au serveur réseau SR à la place de la clé de session KC2. La clé de session KC2 n'est pas transmise. La clé de session KC2 est alors générée par le serveur applicatif SA ou par le serveur réseau SR par application de la fonction mathématique F2 aux valeurs aléatoires AL5 et AL6 et à la clé principale KPC.

Dans un autre mode particulier de réalisation, la valeur aléatoire AL6 et l'adresse ADC2 du terminal sont générées par le serveur de gestion SG, par le serveur réseau SR ou par le serveur applicatif SA, puis transmises au dispositif de transmission P.

La clé de session KC2 peut ne pas être générée par le dispositif de transmission P. Dans ce cas, seule la valeur aléatoire AL5 générée par le terminal C est transmise en association avec l'identifiant IdC du terminal C lors de l'étape S26. La clé de session KC2 est alors générée par le serveur applicatif SA ou par le serveur réseau SR par application de la fonction mathématique F2 aux valeurs aléatoires AL5 et AL6 et à la clé principale KPC.

Dans le mode de réalisation décrit, lors de l'établissement d'une session avec un serveur applicatif, par exemple le serveur de gestion SG ou le serveur applicatif SA, l'authentification d'un terminal ou d'un dispositif de transmission est réalisée par le serveur réseau SR.

En variante, une telle authentification peut être réalisée par le serveur de gestion, le serveur applicatif SA ou un autre équipement du réseau, par exemple un serveur d'authentification du réseau. Dans cette variante, les données associées à un serveur applicatif et nécessaires pour la mise en oeuvre de l'authentification sont mises à disposition de ce serveur.

Une clé secondaire générée à partir d'une clé principale peut être mise à disposition du serveur réseau qui authentifie et/ou déchiffre alors les messages provenant d'un terminal ou d'un dispositif de transmission avant de les transmettre, de préférence via une liaison sécurisée, au serveur applicatif concerné.

Inversement, les messages générés par un serveur applicatif sont signés et/ou chiffrés avec la clé secondaire par le serveur de réseau avant transmission à un terminal ou à un dispositif de transmission.

Une clé secondaire générée à partir d'une clé principale peut également être mise à disposition du serveur applicatif qui peut alors se charger de chiffrer les messages avant transmission et déchiffrer les messages reçus.

Dans le mode de réalisation décrit, une clé de session est générée lors de chaque authentification mutuelle. Une clé de session KSP est générée lors de l'authentification mutuelle du dispositif de transmission P et du serveur de gestion SG, une clé de session KC1 est générée lors de l'authentification mutuelle du terminal C et du serveur applicatif SA et une clé de session KC2 est générée lors de l'authentification mutuelle du terminal C et du dispositif de transmission P.

Au sens du standard LoRaWAN^{™}, ces clés de session sont des clés de session applicatives.

Dans les architectures de type LoRaWAN^{™}, la sécurité des échanges entre les terminaux et les serveurs d'application est assurée à deux niveaux distincts, i.e., au niveau réseau via divers contrôles d'intégrité réalisés par le serveur du réseau jouant les intermédiaires entre les terminaux et les serveurs d'application et par les terminaux eux-mêmes, et au niveau applicatif, via le chiffrement/déchiffrement des données applicatives échangées entre les terminaux et les serveurs d'application. Chacun de ces mécanismes s'appuie, lors de chaque session établie par un terminal avec un serveur d'application via le serveur du réseau, sur l'algorithme de chiffrement connu AES utilisé dans le protocole LoRaWAN^{™} paramétré tantôt au moyen de clés cryptographiques de session réseau, tantôt au moyen de clés cryptographiques de session applicatives. Ces clés cryptographiques sont ici de dimension 128 bits. On note toutefois que l'invention permet d'envisager aisément d'autres algorithmes de chiffrement symétriques que l'algorithme de chiffrement AES, ainsi que d'autres tailles de clés.

L'invention s'applique aussi à cette architecture.

Ainsi, dans une variante de réalisation, lors de l'authentification mutuelle requise par le dispositif de transmission P, la demande d'authentification DA1 émise par le dispositif de transmission P est interceptée par un serveur de réseau SR du réseau LoRa^{™}.

Suite à la réception de la demande d'authentification DA1, le serveur de réseau SR génère d'une part une clé réseau KRP et d'autre part la clé de session KSP.

De même, le dispositif de transmission P génère également outre la clé de session KSP, la clé réseau KRP.

Les messages transmis par le dispositif de transmission P à destination du serveur de gestion SG contiennent des données chiffrées par la clé de session KSP puis signées par la clé réseau KRP. Chaque message est reçu par le serveur de réseau SR qui en vérifie l'intégrité et l'authenticité grâce à sa clé réseau KRP, et les transmet au serveur de gestion SG qui le déchiffre avec la clé de session KSP. A titre d'alternative, s'il a été mandaté pour ce faire, le serveur réseau SR peut déchiffrer le message avec la clé de session KSP et transmettre le message déchiffré au serveur de gestion SG via la liaison LS, de préférence sécurisée.

De même, lors de l'étape d'authentification mutuelle entre le terminal C et le serveur réseau SR, une clé réseau KRC2 peut être générée à partir de la clé principale KPC d'une part par le terminal C et d'autre part par le serveur de réseau SR du réseau LoRa^{™}.

De même, lors de l'étape d'authentification mutuelle entre le terminal C et le dispositif de transmission DP, une clé réseau KRC2 peut être générée à partir de la clé principale KPC d'une part par le terminal C et d'autre part par le dispositif de transmission P.

Les messages transmis ensuite par le terminal C sont alors également signés par la clé réseau KRC2.

En variante de ce mode de réalisation, lors de la réception d'un message de données chiffré avec la clé de session KC2 et signé avec la clé réseau KRC2, en provenance du terminal C, le dispositif de transmission P obtient à l'aide de la clé réseau KRC2, les données DATA chiffrées avec la clé de session KC2 c'est-à-dire KC2(DATA). Il chiffre alors ces données chiffrées (KC2(DATA)) avec la clé de session KSP puis les signe avec la clé réseau KRP avant de transmettre le message ainsi obtenu.

Le message est obtenu par le serveur réseau SR qui obtient et transmet les données chiffrées avec la clé de session KSP au serveur de gestion SG. Ce message est reçu par le serveur de gestion SG qui obtient, à l'aide de sa clé KSP, les données chiffrées avec la clé KC2 et transmet le message obtenu. Ce message est reçu enfin par le serveur applicatif SA qui obtient à l'aide de la clé KC2 les données DATA.

## Revendications

1. Procédé de gestion **caractérisé en ce qu'**il comporte les étapes suivantes mises en oeuvre par un dispositif de transmission (P) apte à communiquer via une liaison radio (L1) avec un équipement passerelle (EP1) formant noeud d'un réseau de télécommunication et configuré pour communiquer avec un serveur de gestion associé (SG) via ledit équipement passerelle et via un serveur réseau (SR) dudit réseau :
réception (E12,S12) en provenance dudit serveur de gestion (SG) d'une demande de gestion (DGC3) d'un terminal (C) apte à communiquer via une liaison radio (L2) avec un équipement passerelle (EP2) du réseau et configuré pour communiquer avec un serveur applicatif associé (SA) via l'équipement passerelle du réseau et ledit serveur réseau et ayant établi une session de communication (SC2) avec le serveur réseau et/ou le serveur applicatif, au moins une clé de session (KC1) étant partagée entre le terminal et le serveur réseau et/ou le serveur applicatif, ladite demande de gestion contenant au moins un identifiant (IdC) dudit terminal et ladite au moins une clé de session ;
suite à la réception de la demande de gestion, réception (E14, S14) d'au moins un message (M1, MD1) émis par ledit terminal ; et
émission (E16, M16), en réponse audit message, d'au moins un message de réponse (M2), à destination du terminal, chiffré avec ladite clé de session reçue.

2. Procédé de gestion selon la revendication 1 dans lequel ladite demande de gestion est reçue (E12,S12) via ledit équipement passerelle (EP1) et via ledit serveur réseau.

3. Procédé de gestion selon la revendication 1 ou 2 dans lequel ledit au moins un message de réponse contient au moins un paramètre de configuration du terminal.

4. Procédé de gestion selon la revendication 3 dans lequel ledit au moins un paramètre de configuration comprend une liste d'au moins un canal radio à valider ou à invalider par le terminal.

5. Procédé de gestion selon la revendication 3 ou 4 dans lequel ledit au moins un paramètre de configuration comprend un moins une valeur de délai à respecter entre un message émis et un message reçu par le terminal.

6. Procédé de gestion selon l'une des revendications 1 à 5 dans lequel ledit au moins un message de réponse contient une demande d'émission par ledit terminal d'une demande de connexion.

7. Procédé de gestion selon l'une des revendications précédentes dans lequel ladite demande de gestion contient des données d'authentification permettant un établissement par ledit dispositif de transmission d'une session de communication avec le terminal.

8. Procédé de gestion selon l'une des revendications précédentes dans lequel le procédé comporte suite à l'émission dudit au moins un message de réponse, une étape de réception d'une demande de connexion audit serveur applicatif émise par ledit terminal et une étape d'établissement d'une session de communication entre ledit terminal et ledit dispositif de transmission.

9. Procédé de gestion selon la revendication 8 dans lequel le procédé comporte, suite à l'établissement de la session de communication entre ledit terminal et ledit dispositif de transmission, une étape d'envoi de données d'établissement de ladite session de communication audit serveur réseau.

10. Procédé de gestion selon l'une des revendications précédentes dans lequel ladite demande de gestion est reçue en réponse à un message émis par le dispositif de transmission.

11. Dispositif de transmission (P) apte à communiquer via une liaison radio avec un équipement passerelle (EP1) formant noeud d'un réseau de télécommunication et configuré pour communiquer avec un serveur de gestion (SG) via ledit équipement passerelle (EP1) et via un serveur réseau (SR) dudit réseau, **caractérisé en ce qu'**il comprend :
un premier module (RCP, RCP3) de réception en provenance dudit serveur de gestion (SG) d'une demande de gestion d'un terminal apte à communiquer via une liaison radio avec un équipement passerelle (EP2) du réseau et configuré pour communiquer avec un serveur applicatif associé via l'équipement passerelle (EP2) du réseau et ledit serveur réseau et ayant établi une session de communication avec le serveur réseau et/ou le serveur applicatif, au moins une clé de session étant partagée entre le terminal et le serveur réseau et/ou le serveur applicatif, ladite demande de gestion contenant au moins un identifiant dudit terminal et ladite au moins une clé de session ;
un deuxième module de réception (RCC) configuré pour intercepter, suite à la réception de la demande de gestion, au moins un message émis par ledit terminal ; et
un module d'émission (EMC), en réponse audit message, d'au moins un message de réponse, à destination du terminal, chiffré avec ladite clé de session reçue.

## Patentansprüche

1. Verwaltungsverfahren, **dadurch gekennzeichnet, dass** es die folgenden Schritte aufweist, die von einer Übertragungsvorrichtung (P) durchgeführt werden, die fähig ist, über eine Funkverbindung (L1) mit einer einen Knoten eines Telekommunikationsnetzes bildenden Gateway-Ausrüstung (EP1) zu kommunizieren, und konfiguriert ist, mit einem zugeordneten Verwaltungsserver (SG) über die Gateway-Ausrüstung und über einen Netzserver (SR) des Netzes zu kommunizieren:
Empfang (E12, S12) vom Verwaltungsserver (SG) einer Verwaltungsanforderung (DGC3) eines Endgeräts (C), das fähig ist, über eine Funkverbindung (L2) mit einer Gateway-Ausrüstung (EP2) des Netzes zu kommunizieren, und konfiguriert ist, mit einem zugeordneten Anwendungsserver (SA) über die Gateway-Ausrüstung des Netzes und den Netzserver zu kommunizieren, und eine Kommunikationssitzung (SC2) mit dem Netzserver und/oder dem Anwendungsserver aufgebaut hat, wobei mindestens ein Sitzungsschlüssel (KC1) zwischen dem Endgerät und dem Netzserver und/oder dem Anwendungsserver gemeinsam genutzt wird, wobei die Verwaltungsanforderung mindestens eine Kennung (IdC) des Endgeräts und den mindestens einen Sitzungsschlüssel enthält;
nach dem Empfang der Verwaltungsanforderung, Empfang (E14, S14) mindestens einer vom Endgerät gesendeten Nachricht (M1, MD1); und
als Antwort auf die Nachricht, Senden (E16, M16) mindestens einer mit dem empfangenen Sitzungsschlüssel verschlüsselten Antwortnachricht (M2) an das Endgerät.

2. Verwaltungsverfahren nach Anspruch 1, wobei die Verwaltungsanforderung über die Gateway-Ausrüstung (EP1) und über den Netzserver empfangen wird (E12, S12).

3. Verwaltungsverfahren nach Anspruch 1 oder 2, wobei die mindestens eine Antwortnachricht mindestens einen Konfigurationsparameter des Endgeräts enthält.

4. Verwaltungsverfahren nach Anspruch 3, wobei der mindestens eine Konfigurationsparameter eine Liste mindestens eines Funkkanals enthält, der vom Endgerät zu validieren oder ungültig zu machen ist.

5. Verwaltungsverfahren nach Anspruch 3 oder 4, wobei der mindestens eine Konfigurationsparameter mindestens einen Verzögerungswert enthält, der zwischen einer vom Endgerät gesendeten Nachricht und einer empfangenen Nachricht zu beachten ist.

6. Verwaltungsverfahren nach einem der Ansprüche 1 bis 5, wobei die mindestens eine Antwortnachricht eine Anforderung des Sendens einer Verbindungsanforderung durch das Endgerät enthält.

7. Verwaltungsverfahren nach einem der vorhergehenden Ansprüche, wobei die Verwaltungsanforderung Authentifizierungsdaten enthält, die einen Aufbau einer Kommunikationssitzung mit dem Endgerät durch die Übertragungsvorrichtung erlauben.

8. Verwaltungsverfahren nach einem der vorhergehenden Ansprüche, wobei das Verfahren nach dem Senden der mindestens einen Antwortnachricht einen Schritt des Empfangs einer vom Endgerät gesendeten Anforderung zur Verbindung mit dem Anwendungsserver und einen Schritt des Aufbaus einer Kommunikationssitzung zwischen dem Endgerät und der Übertragungsvorrichtung aufweist.

9. Verwaltungsverfahren nach Anspruch 8, wobei das Verfahren nach dem Aufbau der Kommunikationssitzung zwischen dem Endgerät und der Übertragungsvorrichtung einen Schritt des Sendens von Aufbaudaten der Kommunikationssitzung an den Netzserver aufweist.

10. Verwaltungsverfahren nach einem der vorhergehenden Ansprüche, wobei die Verwaltungsanforderung als Antwort auf eine von der Übertragungsvorrichtung gesendete Nachricht empfangen wird.

11. Übertragungsvorrichtung (P), die fähig ist, über eine Funkverbindung mit einer einen Knoten eines Telekommunikationsnetzes bildenden Gateway-Ausrüstung (EP1) zu kommunizieren, und konfiguriert ist, mit einem Verwaltungsserver (SG) über die Gateway-Ausrüstung (EP1) und über einen Netzserver (SR) des Netzes zu kommunizieren, **dadurch gekennzeichnet, dass** sie enthält:
ein erstes Modul (RCP, RCP3) zum Empfang einer vom Verwaltungsserver (SG) kommenden Verwaltungsanforderung eines Endgeräts, das fähig ist, über eine Funkverbindung mit einer Gateway-Ausrüstung (EP2) des Netzes zu kommunizieren, und konfiguriert ist, mit einem zugeordneten Anwendungsserver über die Gateway-Ausrüstung (EP2) des Netzes und den Netzserver zu kommunizieren, und eine Kommunikationssitzung mit dem Netzserver und/oder dem Anwendungsserver aufgebaut ist, wobei mindestens ein Sitzungsschlüssel zwischen dem Endgerät und dem Netzserver und/oder dem Anwendungsserver gemeinsam genutzt wird, wobei die Verwaltungsanforderung mindestens eine Kennung des Endgeräts und den mindestens einen Sitzungsschlüssel enthält;
ein zweites Empfangsmodul (RCC), das konfiguriert ist, nach dem Empfang der Verwaltungsanforderung mindestens eine vom Endgerät gesendete Nachricht abzufangen; und
ein Modul zum Senden (EMC), als Antwort auf die Nachricht, mindestens einer mit dem empfangenen Sitzungsschlüssel verschlüsselten Antwortnachricht an das Endgerät.

## Claims

1. Management method, **characterized in that** it comprises the following steps implemented by a transmission device (P) able to communicate via a radio link (L1) with a gateway equipment (EP1) forming a node of a telecommunication network and configured to communicate with an associated management server (SG) via said gateway equipment and via a network server (SR) of said network:
reception (E12, S12) from said management server (SG) of a request for management (DGC3) of a terminal (C) able to communicate via a radio link (L2) with a gateway equipment (EP2) of the network and configured to communicate with an associated application server (SA) via the gateway equipment of the network and said network server and having established a communication session (SC2) with the network server and/or the application server, at least one session key (KC1) being shared between the terminal and the network server and/or the application server, said request for management containing at least one identifier (IdC) of said terminal and said at least one session key;
subsequent to the reception of the request for management, reception (E14, S14) of at least one message (M1, MD1) sent by said terminal; and
sending (E16, M16), in response to said message, of at least one response message (M2), to the terminal, encrypted with said received session key.

2. Management method according to Claim 1, in which said request for management is received (E12, S12) via said gateway equipment (EP1) and via said network server.

3. Management method according to Claim 1 or 2, in which said at least one response message contains at least one configuration parameter of the terminal.

4. Management method according to Claim 3, in which said at least one configuration parameter comprises a list of at least one radio channel to be validated or invalidated by the terminal.

5. Management method according to Claim 3 or 4, in which said at least one configuration parameter comprises at least one lag value to be complied with between a message sent and a message received by the terminal.

6. Management method according to one of Claims 1 to 5, in which said at least one response message contains a request for sending by said terminal of a request for connection.

7. Management method according to one of the preceding claims, in which said request for management contains authentication data allowing establishment by said transmission device of a communication session with the terminal.

8. Management method according to one of the preceding claims, in which the method comprises, subsequent to the sending of said at least one response message, a step of receiving a request for connection to said application server sent by said terminal and a step of establishing a communication session between said terminal and said transmission device.

9. Management method according to Claim 8, in which the method comprises, subsequent to the establishment of the communication session between said terminal and said transmission device, a step of dispatching establishment data of said communication session to said network server.

10. Management method according to one of the preceding claims, in which said request for management is received in response to a message sent by the transmission device.

11. Transmission device (P) able to communicate via a radio link with a gateway equipment (EP1) forming a node of a telecommunication network and configured to communicate with a management server (SG) via said gateway equipment (EP1) and via a network server (SR) of said network, **characterized in that** it comprises:
a first reception module (RCP, RCP3) for receiving from said management server (SG) a request for management of a terminal able to communicate via a radio link with a gateway equipment (EP2) of the network and configured to communicate with an associated application server via the gateway equipment (EP2) of the network and said network server and having established a communication session with the network server and/or the application server,
at least one session key being shared between the terminal and the network server and/or the application server, said request for management containing at least one identifier of said terminal and said at least one session key;
a second reception module (RCC) configured to intercept, subsequent to the reception of the request for management, at least one message sent by said terminal; and
a sending module (EMC) for sending, in response to said message, at least one response message, to the terminal, encrypted with said received session key.
